# EUROPÄISCHE PATENTSCHRIFT

(11) **EP 1 361 113 B1**
(45) Veröffentlichungstag und Bekanntmachung des Hinweises auf die Patenterteilung: **19.04.2006**
(21) Anmeldenummer: 02010557.3
(22) Anmeldetag: 10.05.2002
(51) Int. Cl.: B60Q 3/02, F21S 8/02, F21V 19/04, F21V 29/00

(54) **Leuchte für ein Fahrzeug, insbesondere Leseleuchte für ein Flugzeug**
Vehicle lamp, particularly aircraft reading-light
Lampe pour véhicule, en particulier lampe de lecture pour avion

(43) Veröffentlichungstag der Anmeldung: 12.11.2003
(73) Patentinhaber: Goodrich Lighting Systems GmbH, 59557 Lippstadt (DE)
(72) Erfinder: Brölemann, Rolf, 33154 Salzkotten (DE)
(74) Vertreter: Hilleringmann, Jochen

(56) Entgegenhaltungen:
- EP-A- 0 388 678
- BE-A- 1 011 148
- US-A- 1 754 658

## Beschreibung

Die Erfindung betrifft eine Leuchte für ein Fahrzeug und insbesondere eine Leuchte für den Innenraum eines Fahrzeuges, bei der es sich insbesondere um die Leseleuchte für ein Flugzeug handelt.

Fahrzeugleuchten weisen im Allgemeinen ein Gehäuse auf, in dem ein Leuchtmittel, beispielsweise eine Glühlampe oder ein oder mehrere LEDS angeordnet sind. Zur elektrischen Kontaktierung des Leuchtmittels ist ein Steckerelement vorgesehen, an dem sich zumeist ein elektrisches Kabel befindet.

Ein herausziehbares Steckerelement ist aus BE 1011148-A bekannt.

Um ein unbeabsichtigte Ablösen des Steckerelements zu vermeiden, ist dieses lediglich nach -Überwinden einer bestimmten Mindestkraft in das Gehäuse einsteckbar bzw. aus diesem herausziehbar. Für das Anschließen bzw. das Entfernen des Steckerelements sollte dieses daher mit einem bequem manuell erfassbaren Anfassende versehen sein, über das die erforderlichen Andrück- und Abzugskräfte manuell aufgebracht - werden können. Ein derartig ausgebildetes Steckerelement benötigt jedoch einen gewissen Platzbedarf und steht im Regelfall vom Gehäuse ab, was je nach Einbausituation sowie den zumeist beengten Platzverhältnissen in einem Fahrzeug problematisch ist.

Eine Aufgabe der Erfindung ist daher, eine Leuchte für ein Fahrzeug und insbesondere eine Leseleuchte für ein Flugzeug zu schaffen, die über ein bequem handhabbares und dennoch platzsparendes Steckerelement verfügt.

Zur Lösung dieser Aufgabe wird mit der Erfindung eine Leuchte für ein Fahrzeug und insbesondere eine Leseleuchte für ein Flugzeug vorgeschlagen, die versehen ist mit
- einem Gehäuse,
- einem in dem Gehäuse angeordneten Leuchtmittel und
- einem Steckerelement zur elektrischen Kontaktierung des Leuchtmittels und
- einem Abzugshilfeelement zum Abziehen des Steckerelements von dem Gehäuse in einer Abzugsrichtung,
- wobei das Abzugshilfeelement ein erstes Ende, das um eine quer zur Abzugsrichtung verlaufende Schwenkachse schwenkbar an dem Steckerelement angeordnet ist, und ein zweites Ende aufweist, das zum manuellen Erfassen und Ziehen an dem Abzugshilfeelement ausgebildet ist, und
- wobei das Abzugshilfeelement zwischen einer Parkposition, in der es an dem Gehäuse anliegt, und einer Abzugsposition schwenkbar ist, in der es zum Abziehen des Steckerelements von dem Gehäuse absteht.

Die erfindungsgemäße Leuchte verfügt über ein Abzugshilfeelement, mit dem sich das Steckerelement von dem Gehäuse in einer Abzugsrichtung abziehen lässt. Das Abzugshilfeelement ist quer zur Abzugsrichtung schwenkbar an dem Steckerelement angeordnet. An einem zweiten Ende ist das Abzugshilfeelement zur manuellen Erfassung und zum manuellen Ziehen ausgebildet, was beispielsweise in Form einer Verbreiterung des zweiten Endes oder in Form einer Öffnung realisiert ist, in die hinein man mit einem oder mehreren Fingern einer Hand fassen kann. Das Abzugshilfeelement ist zwischen einer Parkposition und einer Abzugsposition schwenkbar. In der Parkposition liegt das Abzugshilfeelement an dem Gehäuse an, während es in der Abzugsposition von dem Gehäuse absteht.

Durch die schwenkbare Lagerung des Abzugshilfeelements ist es möglich, dieses platzsparend am Gehäuse unterzubringen, wenn das Steckerelement nicht abgezogen werden soll. Zum Abziehen des Steckerelements, wie dies beispielsweise bei der Demontage bzw. dem Auswechseln des Leuchtmittels erforderlich sein kann, wird das Abzugshilfeelement in seine Abzugsposition verschwenkt, in der es an seinem freien Ende einfach manuell erfassbar ist, um auf das Abzugshilfeelement die zum Abziehen des Steckerelements erforderlichen Kräfte aufzubringen. Damit ist eine Anordnung geschaffen, die einerseits platzsparend ist und andererseits es ermöglicht, die erforderlichen Abzugskräfte auf das Steckerelement aufbringen zu können.

In vorteilhafter Weiterbildung der Erfindung ist vorgesehen, dass ein Anschlusskabel für das Leuchtmittel, das zum Steckerelement führt, an dem Abzugshilfeorgan geführt ist. Damit wird also das Abzugshilfeelement in zweifacher Weise genutzt, nämlich auch zur Führung des Anschlusskabels, was dessen saubere und ordnungsgemäße Verlegung ermöglicht.

In vorteilhafter Weiterbildung der Erfindung ist ferner vorgesehen, dass das Abzugshilfeelement in seiner Parkposition gegen unbeabsichtigte Bewegungen an dem Gehäuse gesichert ist. Dies kann beispielsweise durch zusätzliche Haltemittel aber auch durch eine Verrastung des Abzugshilfeelements in der Parkposition erfolgen. Diese Verrastung geschieht beispielsweise an dem schwenkbar gelagerten Ende des Abzugshilfeelements oder aber an dessen anderen (Anfass-) Ende, das zu diesem Zweck beispielsweise hinter einen Rastvorsprung oder in eine Rastvertiefung am Gehäuse einrastet:

In zunehmendem Maße wird insbesondere für die Beleuchtung des Innenraums von Flugzeugen und vorzugsweise als Leseleuchten LEDs eingesetzt. Die während des Betriebs derartiger LEDs erzeugte Wärme muss abgeführt werden, wozu das Gehäuse einen Kühlkörper aufweist. Der Kühlkörper verfügt über mehrere Kühlrippen, die beispielsweise parallel oder sternförmig angeordnet sind. Es bietet sich bei einer derartigen Konstruktion an, dass das Abzugshilfeelement zur Sicherung in seiner Parkposition zumindest eine der Kühlrippen umgreift. In seiner Parkposition verläuft also das Abzugshilfeelement längs des Kühlkörpers und folgt dessen Formgebung, um dann an seinem zweiten Ende hinter mindestens eine freiliegende Kante oder ein anderweitig ausgebildetes Ende einer Kühlrippe zu greifen.

Das Steckerelement befindet sich vorzugsweise in einer Aufnahmevertiefung des Gehäuses und ist in diesem gegen ein unbeabsichtigtes Ablösen und feuchtigkeitsdicht gelagert. Ist das Gehäuse an seinem mit dem Steckerelement versehenen Ende nach Art eines Doms ausgebildet, so ist es zweckmäßig, die Aufnahmevertiefung im Bereich des Scheitelpunktes des Domes anzuordnen. Bei einem derartigen Gehäuse befindet sich der vorzugsweise mit sternförmig verlaufenden Kühlrippen versehene Kühlkörper auf dem domartigen Ende des Gehäuses, auf das er aufgesetzt ist.

Eine einfache Konstruktion des Abzugshilfeelements ist dadurch möglich, dass dieses einen Längsstegabschnitt aufweist, dessen eines Ende schwenkbar am Steckerelement gelagert ist und an dessen gegenüberliegendem anderen Ende sich ein Querstegabschnitt befindet, der quer zum Längsstegabschnitt verläuft. Dadurch entsteht eine im wesentlichen T-förmige Struktur, die sich leicht zwecks Abziehens des Steckerelements mit beispielsweise dem Zeige- und dem Mittelfinger einer Hand erfassen lässt, die um die beiden seitlich vom Längsstegabschnitt abstehenden Enden des Querstegabschnitts greifen, um in Richtung des Längsstegabschnitts Zugkräfte auf das Abzugshilfeelement ausüben zu können.

Vorzugsweise ist der Längsstegabschnitt des Abzugshilfeelements an die äußere Kontur des Gehäuses im Bereich des Steckerelements angepasst Damit legt sich das Abzugshilfeelements in seiner Parkposition dicht an das Gehäuse an. Beispielsweise ist der Längsstegabschnitt bogenförmig ausgebildet, da das Gehäuse bzw. die an das Gehäuse angrenzende Kontur im Bereich des Steckerelements bogenförmig verläuft.

Das Abzugshilfeelement ist zweckmäßigerweise mit einer Gitterstruktur versehen, die einzelne Verstrebungen aufweist, an den bzw. zwischen denen ein Anschlusskabel auf einfache Weise geführt werden kann. Andere Möglichkeiten der Führung eines Anschlusskabels an dem Abzugshilfeelement sind ebenfalls denkbar. Hier kommen beispielsweise separate Befestigungselemente wie Kabelbinder oder dergleichen in Frage. Vorstehende Haken, an denen das Anschlusskabel einhakbar ist, sind ebenfalls möglich.

Die Erfindung wird nachfolgend anhand der Zeichnungen näher erläutert: Im einzeinen zeigen:
- Fig. 1: eine Seitenansicht einer Leseleuchte für einen Flugzeugsitzplatz mit anliegenden Abzugshilfeelementen,
- Fig. 2: eine Draufsicht auf die Leseleuchte gemäss Figur 1,
- Fig.: eine Seitenansicht der Leseleuchte mit abstehenden Abzugshilfeelement und
- Fig. 4 und Fig. 5: perspektivische Darstellung des Abzugshilfeelements zur Verdeutlichurig von dessen Ausgestaltung und Konstruktion.

Die erfindungsgemäße Fahrzeugleuchte wird nachfolgend anhand einer beispielhaften Ausgestaltung als Fahrzeuginnenraumleuchte und hier insbesondere in ihrer Verwendung als Leseleuchte für einen Flugzeug-Sitzplatz beschrieben.

Die. Erfindung ist selbstverständlich auf die Verwendung im Innenraum eines Flugzeuges nicht beschränkt.

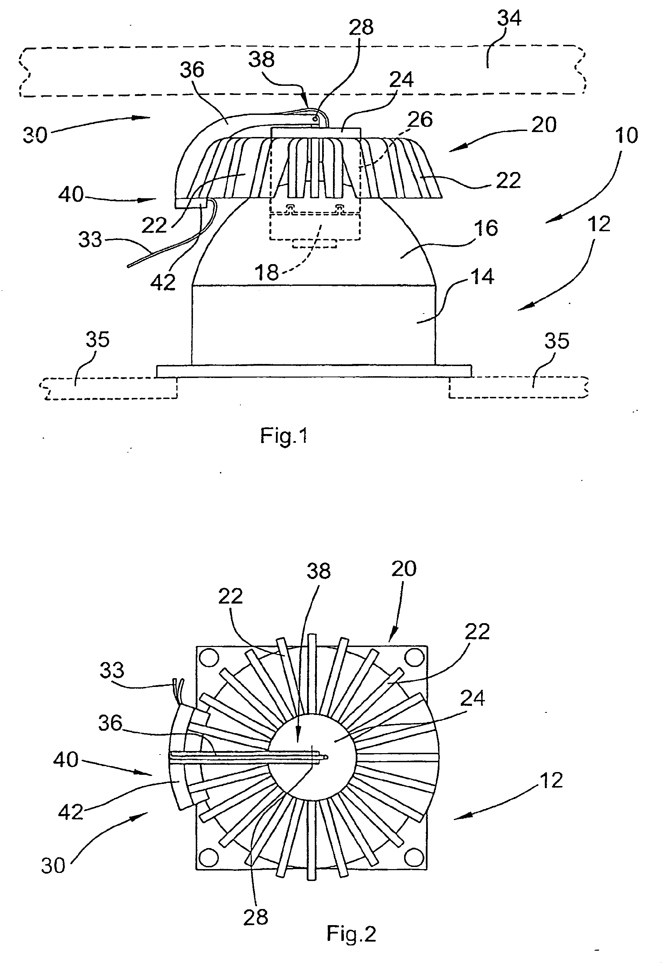

Gemäss Fign. 1 bis 3 weist die (Lese-) Leuchte 10 ein Gehäuse 12 auf, das mit einem zylindrischen Gehäuseteil 14 und einem kuppel- bzw. domartigen Gehäuseteil 16 versehen ist. Andere Gehäuseformen sind ebenfalls möglich.

In dem Gehäuse 12 befindet sich ein oder mehrere LEDs 17 als Leuchtmittel, die thermisch mit einem Kühlkörper 20 gekoppelt sind, welcher sternförmig sich erstreckende Kühlrippen 22 aufweist und auf den domartigen Gehäuseteil 16 aufgesetzt ist.

Zur elektrischen Kontaktierung der LEDs dient ein Steckerelement 24, das in einer Aufnahmevertiefung 26 des Kühlkörpers 20 bzw. des Gehäuses 12 angeordnet ist.

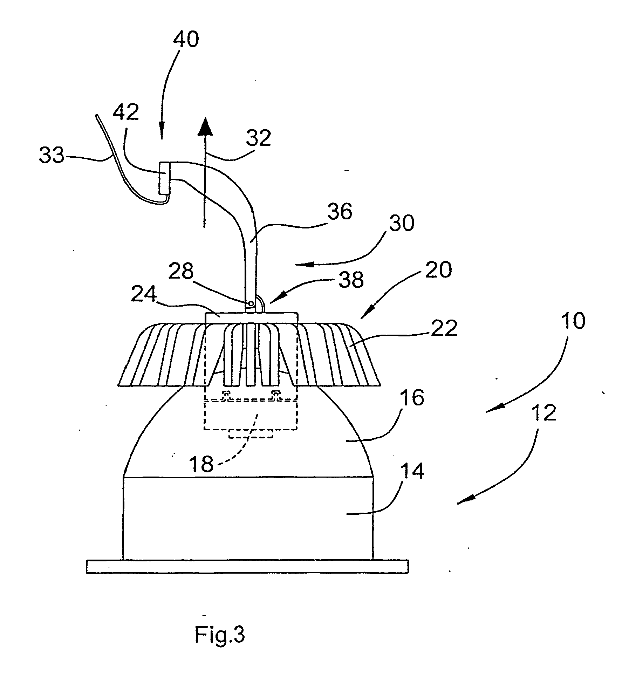

Mit dem Steckerelement 24 um eine Schwenkachse 28 schwenkbar verbunden ist ein Abzugshilfeelement 30, mit dessen Hilfe sich das Steckerelement 24 in der durch den Pfeil 32 (siehe Fig. 3) angedeuteten Abzugsrichtung aus dem Kühlkörper 20 bzw. dem Gehäuse 12 abziehen und in diese einsetzen lässt.

Die Schwenkachse 28 ist zum Beispiel als Hohlniete oder Bolzen ausgeführt, um den das Abzugshilfeelement drehbar ist und der an dem Steckerelement 24 gelagert ist. Eine andere Art der gelenkigen Verbindung von Abzugshilfeelements 30 und Steckerelement 24 als über eine Schwenkachse, zum Beispiel durch einen Filmscharnier, ist möglich. In sämtlichen Fällen gilt, dass die Gelenkachse quer zur Abzugsrichtung (Pfeil 32) verläuft. An das Abzugshilfeelement 30 ist ferner das elektrische Anschlusskabel 33 für die LEDs 18 geführt.

Fig. 1 zeigt die Einbausituation der Leseleuchte 10 mit Struktur- bzw. Verkleidungselementen 34,35 z.B. des Fahr- bzw. Flugzeuges. Das Abzugshilfeelement 30 befindet sich in seiner abgeklappten (Park-) Position, in der von außen an dem Kühlkörper 20 anliegt und somit die Einbauhöhe der Leseleuchte 10 nicht beeinträchtigt.

In der Parkposition ist das Abzugshilfeelement 30 an dem Kühlkörper 20 gesichert gehalten. Das Abzugshilfeelement 30 weist einen der Kontar des Kühlkörpers 20 angepassten gebogenen Längsstegabschnitt 36 mit Gitterstruktur auf, dessen eines Ende 38 schwenkbar an dem Steckerelement 24 gelagert ist. An dem gegenüberliegenden Ende 40 des Längsstegabschnitts 36 befindet sich ein Querstegabschnitt 42, der beidseitig vom Längsstegabschnitt 36 absteht. Der Querstegabschnitt 42 weist ebenfalls eine Gitterstruktur auf und greift in der Parkposition des Abzugshilfeelements 30 unter die gegenüber dem Gehäuse 12 leicht vorstehenden Enden einiger Kühlrippen 22 (Hinterschnitt, siehe auch Fig. 2).

Zum Abziehen des Steckerelements 24 wird das Abzugshilfeelement 30 in eine Abzugsposition verschwenkt (siehe Fig. 3), in der das Steckerelement 24 in Abzugsrichtung (Pfeil 32) aus dem Gehäuse 12 bzw. dem Kühlkörper 20 herausgezogen werden kann. Hierbei wird das Abzugshilfeelement 30 an seinem Querstegabschnitt 42 beidseitig des Längsstegabschnitts 36 mit jeweils einem Finger umgriffen, um auf das Abzugshilfeelement 30 wie bei einem Korkenzieher eine Zugkraft aufbringen zu können.

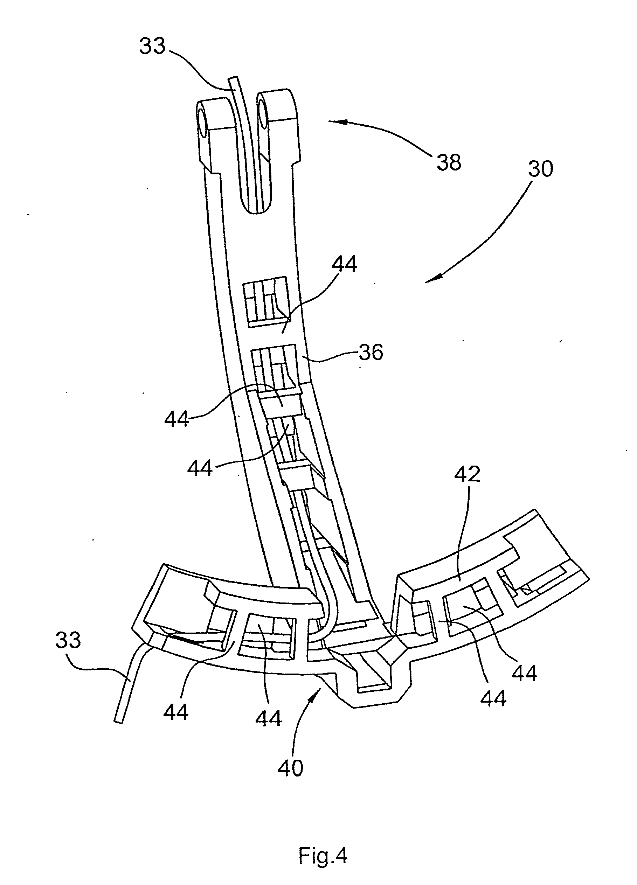

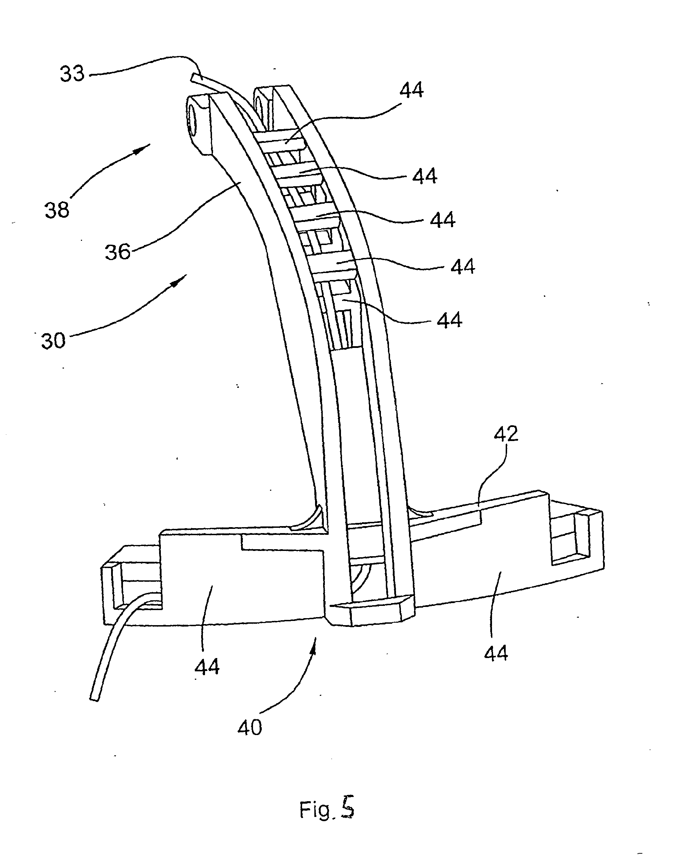

In den Fign. 4 und 5 sind zwei perspektivische Darstellungen des Abzugshilfeelements 30 wiedergeben. Zu erkennen ist die mit Streben 44 versehene Gitterstruktur durch die hindurch und aus der heraus das Anschlusskabel 33 geführt ist. Die Verstrebungen verleihen dem Abzugshilfeelement 30 eine ausreichende Stabilität bei leichtgewichtiger Ausführung (Material z.B. ggf. faserverstärkter Kunststoff) sowie eine ausreichende Flexibilität, um das Abzugshilfeelement 30 durch Umgreifen der Enden einiger Kühlrippen 22 an dem Kühlkörper 20 in der Parkposition verrasten sowie diese Verrastung durch Lösen dieser Umgreifung wieder aufheben zu können.

## Patentansprüche

1. Leuchte für ein Fahrzeug, insbesondere Leseleuchte für ein Flugzeug, mit
- einem Gehäuse (12),
- einem in dem Gehäuse (12) angeordneten Leuchtmittel (18) und
- einem Steckerelement (24) zur elektrischen Kontaktierung des Leuchtmittels (18)
- ein Abzugshilfeelement (30) zum Abziehen des Steckerelements (24) von dem Gehäuse (12) in einer Abzugsrichtung (32)
- **dadurch gekennzeichnet daß** das Abzugshilfeelement (30) ein erstes Ende (38), das um eine quer zur Abzugsrichtung (32) verlaufende Schwenkachse (28) an dem Steckerelement (24) angeordnet ist, und ein zweites Ende (40) aufweist, das zum manuellen Erfassen und Ziehen an dem Abzugshilfeelement (30) ausgebildet ist, und
- das Abzugshilfeelement (30) zwischen einer Parkposition, in der es an dem Gehäuse (12) anliegt, und einer Abzugsposition zum Abziehen des Steckerelements (24) von dem Gehäuse (12) schwenkbar ist, in der es von dem Gehäuse (12) absteht.

2. Leuchte für ein Fahrzeug nach Anspruch 1, **gekennzeichnet durch**, ein Anschlusskabel (33) für das Leuchtmittel (18), wobei das Anschlusskabel (33) an dem Abzugshilfeelement (30) geführt ist

3. Leuchte für ein Fahrzeug nach Anspruch 1 oder 2, **gekennzeichnet durch**, dass das Abzugshilfeelement (30) in seiner Parkposition an dem Gehäuse (12) gegen unbeabsichtigte Bewegungen gesichert ist.

4. Leuchte für ein Fahrzeug nach einem der Ansprüche 1 bis 3, **dadurch gekennzeichnet, dass** das Gehäuse (12) eine Aufnahmevertiefung (26) für das Steckerelement (24) aufweist.

5. Leuchte für ein Fahrzeug nach einem der Ansprüche 1 bis 4, **dadurch gekennzeichnet, dass** das Gehäuse (12) einen mit Kühlrippen (22) versehenen Kühlkörper (20) aufweist.

6. Leuchte für ein Fahrzeug nach einem der Ansprüche 4 und 5, **dadurch gekennzeichnet, dass** das Abzugshilfeelement (30) in der Parkposition zumindest eine der Kühlrippen (22) umgreift.

7. Leuchte für ein Fahrzeug nach einem der Ansprüche 1 bis 6, **dadurch gekennzeichnet, dass** das Gehäuse (12) ein nach Art eines Doms mit einem Scheitelpunkt ausgebildetes eines Ende aufweist und dass das Steckerelement (24) und, sofern vorhanden, dessen Aufnahmevertiefung (26) im Bereich des Scheitelpunkte angeordnet ist.

8. Leuchte für ein Fahrzeug, nach Anspruch 6 und 7, **dadurch gekennzeichnet, dass** der Kühlkörper (20) an dem domartigen Ende des Gehäuses (12) angeordnet ist.

9. Leuchte für ein Fahrzeug nach einem der Ansprüche 1 bis 8, **dadurch gekennzeichnet, dass** das Abzugshilfeelement (30) einen mit dem ersten Ende (38) versehenen Längsstegabschnitt (36) und einen das zweite Ende (40) bildenden Querstegabschnitt (42) aufweist, der quer zum Längsstegabschnitt (36) verläuft.

10. Leuchte für ein Fahrzeug nach Anspruch 9, **dadurch gekennzeichnet, dass** der Längsstegabschnitt (36) des Abzugshilfeelementes (30) bogenförmig ausgebildet ist.

11. Leuchte für ein Fahrzeug nach Anspruch 9 oder 10, **dadurch gekennzeichnet, dass** der Längssteg- und der Querstegabschnitt (36,42) jeweils eine Gitterstruktur mit Streben (44) aufweist, zwischen und/oder an denen ein Anschlusskabel (33) für das Leuchtmittel (18) geführt ist.

12. Leuchte für ein Fahrzeug nach einem der Ansprüche 1 bis 11, **dadurch gekennzeichnet, dass** das Leuchtmittel (18) mindestens eine LED aufweist.

## Claims

1. A lamp for a vehicle, in particular a reading lamp for an aircraft, comprising:
- a housing (12),
- an illuminant (18) arranged in the housing (12), and
- a plug element (24) for electrically contacting the illuminant (18),
- a pull-off-assisting element (30) for pulling the plug element (24) off the housing (12) in a pull-off direction (32),
**characterized in that**
- the pull-off-assisting element (30) comprises a first end (38) arranged at the plug element (24) such that it is pivotable about a pivoting axis (28) which extends transversely to the pull-off direction (32), and a second end (40) configured for being manually gripped and pulling the pull-off-assisting element (30), and
- the pull-off-assisting element (30) is pivotable between a parking position in which it rests against the housing (12), and a pull-off position for pulling the plug element (24) off the housing (12), in which position it extends from the housing (12).

2. The lamp for a vehicle according to claim 1, **characterized by** a connecting cable (33) for the illuminant (18), wherein the connecting cable (33) is arranged at the pull-off-assisting element (30).

3. The lamp for a vehicle according to claim 1 or 2, **characterized in that** the pull-off-assisting element (30), in its parking position, is secured at the housing (12) against unintentional movements.

4. The lamp for a vehicle according to one of claims 1 to 3, **characterized in that** the housing (12) comprises a receiving recess (26) for the plug element (24).

5. The lamp for a vehicle according to one of claims 1 to 4, **characterized in that** the housing (12) comprises a cooling body (20) provided with cooling ribs (22).

6. The lamp for a vehicle according to one of claims 4 and 5, **characterized in that** the pull-off-assisting element (30), in its parking position, embraces at least one of the cooling ribs (22).

7. The lamp for a vehicle according to one of claims 1 to 6, **characterized in that** the housing (12) comprises an end configured in the form of a dome with a vertex, and that the plug element (24) and, if provided, its receiving recess (26) is arranged within the region of the vertex.

8. The lamp for a vehicle according to claim 6 and 7, **characterized in that** the cooling body (20) is arranged at the dome-like end of the housing (12).

9. The lamp for a vehicle according to one of claims 1 to 8, **characterized in that** the pull-off-assisting element (30) comprises a longitudinal web section (36) provided with the first end (38), and a transverse web section (42) forming the second end (40), said transverse web section (42) extending transversely to the longitudinal web section (36).

10. The lamp for a vehicle according to claim 9, **characterized in that** the longitudinal web section (36) of the pull-off-assisting element (30) is arcuate.

11. The lamp for a vehicle according to claim 9 or 10, **characterized in that** the longitudinal and the transverse web sections (36,42) each comprise a grid structure provided with bars (44) between and/or at which a connecting cable (33) for the illuminant (18) is arranged.

12. The lamp for a vehicle according to one of claims 1 to 11, **characterized in that** the illuminant (18) comprises at least one LED.

## Revendications

1. Lampe pour un véhicule, en particulier lampe de lecture pour un avion, comportant:
- un boîtier (12),
- un moyen d'éclairage (18) disposé dans le boîtier (12), et
- un élément enfichable (24) pour le contact électrique du moyen d'éclairage (18),
- un élément d'aide au retrait (30) pour retirer l'élément enfichable (24) du boîtier (12) dans une direction de retrait (32),
**caractérisée en ce que** l'élément d'aide au retrait (30) présente une première extrémité (38) qui est disposée sur l'élément enfichable (24), autour d'un axe de pivotement (28) dirigé perpendiculairement à la direction de retrait (32), et une deuxième extrémité (40) qui est réalisée pour saisir manuellement et tirer sur l'élément d'aide au retrait (30), et
- **en ce que** l'élément d'aide au retrait (30) peut pivoter entre une position à l'arrêt, dans laquelle il est placé contre le boîtier (12), et une position de retrait, dans laquelle il est situé à distance du boîtier (12), pour retirer l'élément enfichable (24) du boîtier (12).

2. Lampe pour un véhicule suivant la revendication 1, **caractérisée par** un câble de raccordement (33) pour le moyen d'éclairage (18), le câble de raccordement (33) aboutissant à l'élément d'aide au retrait (30).

3. Lampe pour un véhicule suivant la revendication 1 ou 2, **caractérisée en ce que** l'élément d'aide au retrait (30), dans sa position à l'arrêt, est placé contre le boîtier (12) et est protégé contre des mouvements non envisagés.

4. Lampe pour un véhicule suivant l'une des revendications 1 à 3, **caractérisée en ce que** le boîtier (12) présente un creux de réception (26) pour l'élément enfichable (24).

5. Lampe pour un véhicule suivant l'une des revendications 1 à 4, **caractérisée en ce que** le boîtier (12) présente un corps de refroidissement (20) muni de nervures de refroidissement (22).

6. Lampe pour un véhicule suivant l'une des revendications 4 et 5, **caractérisée en ce que** l'élément d'aide au retrait (30), dans la position à l'arrêt, fait prise autour d'au moins une nervure de refroidissement (22).

7. Lampe pour un véhicule suivant l'une des revendications 1 à 6, **caractérisée en ce que** le boîtier (12) présente une extrémité réalisée avec une partie bombée à la manière d'un dôme avec un sommet et **en ce que** l'élément enfichable (24) et, dans la mesure où il existe, son creux de réception (26), sont disposés dans la zone du sommet.

8. Lampe pour un véhicule suivant la revendication 6 ou 7, **caractérisée en ce que** le corps de refroidissement (20) est disposé sur la partie formant dôme du boîtier (12).

9. Lampe pour un véhicule suivant l'une des revendications 1 à 8, **caractérisée en ce que** l'élément d'aide au retrait (30) présente une partie constituant une barre longitudinale (36), munie de la première extrémité (38), et une partie constituant une barre transversale (42), formant la deuxième extrémité (40), qui est dirigée transversalement par rapport à la partie constituant la barre longitudinale (36).

10. Lampe pour un véhicule suivant la revendication 9, **caractérisée en ce que** la partie constituant la barre longitudinale (36) de l'élément d'aide au retrait (30) est réalisée en forme d'arc.

11. Lampe pour un véhicule suivant la revendication 9 ou 10, **caractérisée en ce que** les parties (36, 42) constituant la barre longitudinale et la barre transversale présentent chacune une structure de grille avec des barreaux (44), entre et/ou contre lesquels est guidé un câble de raccordement (33) pour le moyen d'éclairage (18).

12. Lampe pour un véhicule suivant l'une des revendications 1 à 11, **caractérisée en ce que** le moyen d'éclairage (18) présente au moins une LED (diode électroluminescente).
